# EUROPEAN PATENT SPECIFICATION

(11) **EP 3 974 626 B1**
(45) Date of publication and mention of the grant of the patent: **13.12.2023**
(21) Application number: 21198364.8
(22) Date of filing: 22.09.2021
(51) Int. Cl.: F01N 3/025, F01N 3/20, F01N 3/30, F01N 3/36, F01N 3/38, F01N 13/14

(54) **HEATING DEVICE FOR AN EXHAUST SYSTEM OF AN INTERNAL COMBUSTION ENGINE**
HEIZVORRICHTUNG FÜR EIN ABGASSYSTEM EINES VERBRENNUNGSMOTORS
DISPOSITIF DE CHAUFFAGE D'UN SYSTÈME D'ÉCHAPPEMENT D'UN MOTEUR À COMBUSTION INTERNE

(30) Priority: 23.09.2020 IT 202000022396
(43) Date of publication of application: 30.03.2022
(73) Proprietor: Marelli Europe S.p.A., 20011 Corbetta (MI) (IT)
(72) Inventor: BRIGNONE, Mauro, 10124 TORINO (IT); MILANI, Emanuele, 13876 SANDIGLIANO (BI) (IT); RIVELLA, Stefano, 10014 CALUSO (TO) (IT); LA SANA, Marco, 10137 TORINO (IT)
(74) Representative: Studio Torta S.p.A.

(56) References cited:
- CN-B- 104 006 394
- DE-T5-112014 001 029
- US-A- 2 621 477
- US-A- 5 320 523
- US-A1- 2014 123 632
- US-A1- 2015 300 630

## Description

### CROSS-REFERENCE TO RELATED APPLICATIONS

This Patent Application claims priority from Italian Patent Application No. 102020000022396 filed on September 23, 2020.

### TECHNICAL FIELD

The present invention relates to a heating device for an exhaust system of an internal combustion engine.

### PRIOR ART

An exhaust system of an internal combustion engine comprises an exhaust duct along which at least one device for treating the exhaust gases coming from the internal combustion engine is installed; in particular, a catalyst (oxidizing or reducing agent) is always provided to which a particulate filter can be added. In order to function (i.e., to carry out the catalytic conversion) the catalyst requires to operate at a relatively high operating temperature (a modern catalyst works at temperatures close to 800°C) as the chemical reactions of conversion of unburnt hydrocarbons, nitrogen oxides and carbon monoxide into carbon dioxide, water and nitrogen only occur once the operating temperature has been reached.

During a cold start phase (i.e., when the internal combustion engine is turned on after a prolonged stop due to which the temperature of the various components of the internal combustion engine has reached ambient temperature), the temperature of the catalyst remains for a relatively long time (even a few minutes in winter and during a city route along which the internal combustion engine always, or almost always idles) far below the operating temperature. Consequently, during the cold start phase, i.e., during the period of time in which the catalyst has not yet reached its operating temperature, the polluting emissions at the outlet are high because the purification effect of the catalyst is zero or in any case not very effective.

In order to speed up the achievement of the catalyst operating temperature, the patent documents EP0631039A1, WO2012139801A1, US8006487B2, US5320523A, CN104006394A, WO2014133817A1, US2015300630A1, US2014123632A1 and US2621477A propose to install a heating device along the exhaust duct which, by burning fuel, generates a flow of (very) hot air passing through the catalyst. In particular, the heating device comprises a combustion chamber which is connected, at the outlet, to the exhaust duct (immediately upstream of the catalyst) and is connected, at the inlet, to a fan that generates a flow of air that passes through the combustion chamber; in the combustion chamber a fuel injector, which injects fuel that mixes with the air and a spark plug, which cyclically releases sparks to ignite the air-fuel mixture in order to obtain combustion that heats the air are also provided.

Inside a heating device, fuel combustion occurs at high temperatures (in the case of gasoline above 1200-1400°C); consequently, the walls of the combustion chamber heat up to temperatures close to 1000°C and therefore tend to release a lot of heat to everything that surrounds the combustion chamber. The heat that is released from the walls of the combustion chamber can be a problem as it can overheat components that are close to the combustion chamber. In addition, the heat that is released from the walls of the combustion chamber represents a *"loss of thermal power"* since after being generated it does not contribute to heating the catalyst (i.e., it reduces the energy efficiency of the heating device).

To limit the dispersion of heat from the walls of the combustion chamber it has been proposed to wrap the walls of the combustion chamber with thermal insulation; however, this solution significantly increases both the production cost of the heating device and the size of the heating device.

### DESCRIPTION OF THE INVENTION

The object of the present invention is to provide a heating device for an exhaust system of an internal combustion engine, which heating device allows to obtain a high energy efficiency and, at the same time, is easy and inexpensive to manufacture and has reduced overall dimensions.

According to the present invention, a heating device is provided for an exhaust system of an internal combustion engine, as claimed in the attached claims.

The claims describe preferred embodiments of the present invention forming an integral part of the present description.

### BRIEF DESCRIPTION OF THE DRAWINGS

The present invention will now be described with reference to the attached drawings, which illustrate a non-limiting embodiment thereof, wherein:
- Figure 1 is a schematic and partial view of an exhaust system of an internal combustion engine provided with a heating device manufactured according to the present invention;
- Figure 2 is a schematic view, in longitudinal section and with parts removed for clarity of the heating device of Figure 1;
- Figure 3 is a schematic view, in longitudinal section and with parts removed for clarity of the heating device of Figure 1, showing accentuated paths of the air flow;
- Figure 4 is a perspective view of the heating device of Figure 1;
- Figure 5 is a side view of the heating device of Figure 1;

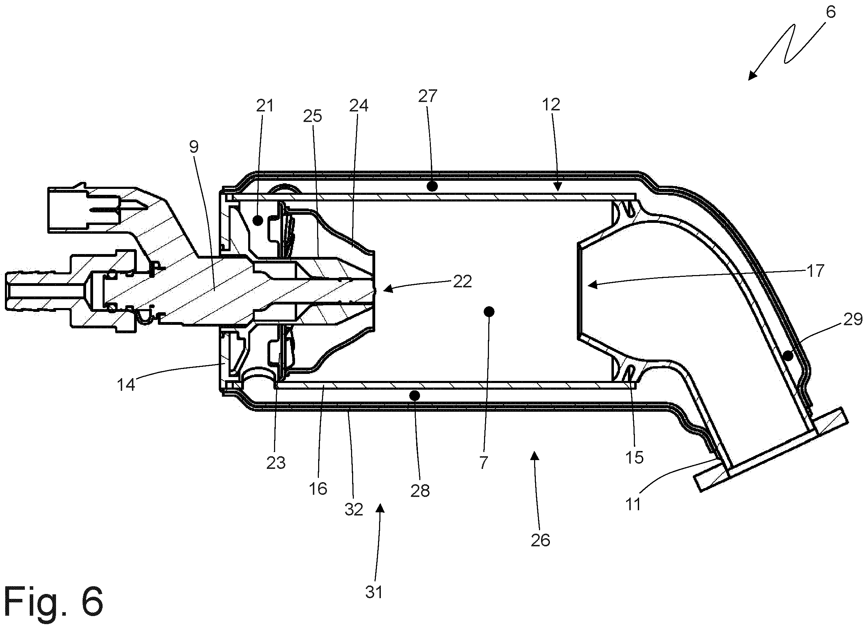

- Figure 6 is a longitudinal sectional view of the heating device of Figure 1; and
- Figures 7 and 8 are two different cross-sectional views of the heating device of Figure 1.

### PREFERRED EMBODIMENTS OF THE INVENTION

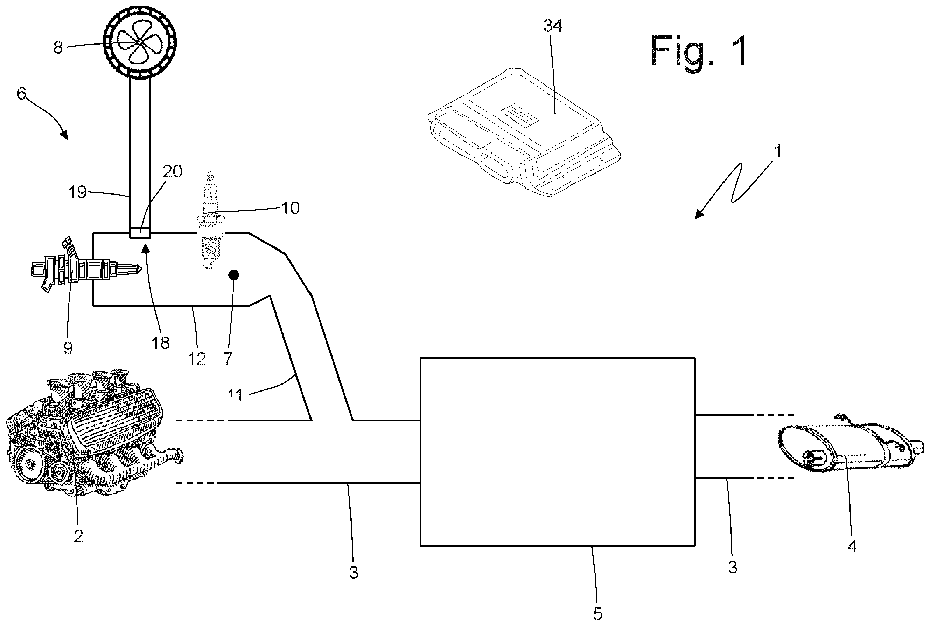

In Figure 1, number 1 denotes as a whole an exhaust system of an internal combustion engine 2.

The exhaust system 1 comprises an exhaust duct 3 which originates from an exhaust manifold of the internal combustion engine 2 and ends with a silencer 4 from which the exhaust gases are released into the atmosphere. At least one exhaust gas treatment device 5 for the exhaust gases coming from the internal combustion engine is installed along the exhaust duct 3; in particular, a catalyst (oxidizing or reducing agent) is always provided to which a particulate filter can be added. In order to function (i.e., to carry out the catalytic conversion) the catalyst requires to operate at a relatively high operating temperature (a modern catalyst works at temperatures close to 800°C) as the chemical reactions of conversion of unburnt hydrocarbons, nitrogen oxides and carbon monoxide into carbon dioxide, water and nitrogen only occur once the operating temperature has been reached.

To speed up the heating of the treatment device 5, i.e., to allow the treatment device 5 to reach its operating temperature more quickly, the exhaust system 1 comprises a heating device 6 which, by burning fuel, generates a flow of (very) hot air, which passes through the treatment device 5.

The heating device 6 comprises a combustion chamber 7 which is connected, at the outlet, to the exhaust duct 3 (immediately upstream of the treatment device 5) and is connected, at the inlet, to a fan 8 (i.e., to an air pump) which generates a flow of air passing through the combustion chamber 7; in the combustion chamber 7 a fuel injector 9, which injects fuel that mixes with the air and a spark plug 10, which cyclically lights sparks to ignite the air-fuel mixture in order to obtain combustion heating the air are also arranged. The combustion chamber 7 of the heating device 6 ends with an outlet duct 11, which engages in the discharge duct 3 (immediately upstream of the treatment device 5).

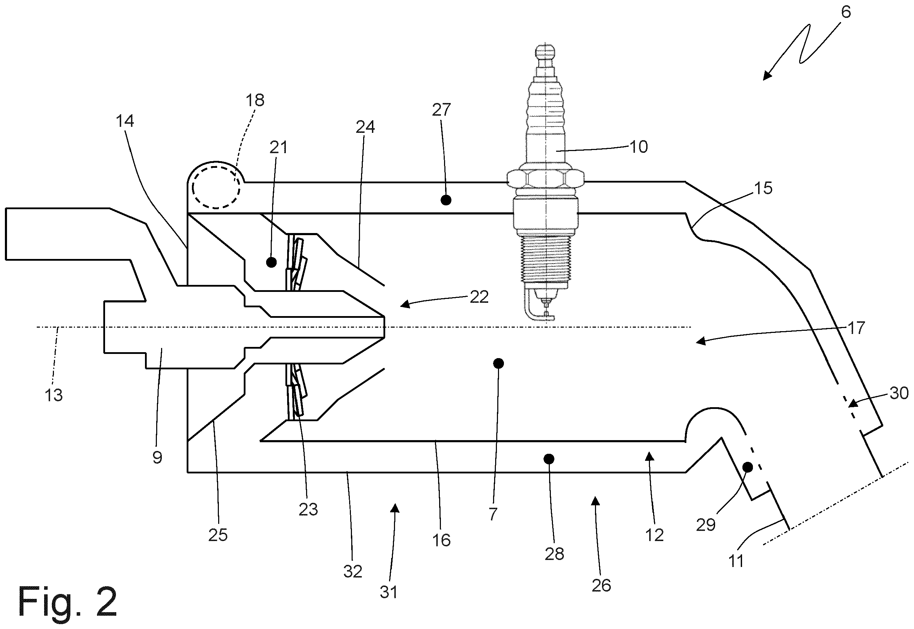

According to what is illustrated in Figure 2, the heating device 6 comprises a tubular body 12 (for example cylindrical in shape and having a circular or elliptical cross-section) having a longitudinal axis 13; the tubular body 12 is delimited at its two ends by two opposite base walls 14 and 15 and is laterally delimited by a side wall 16 which connects the two base walls 14 and 15 to one another. The base wall 14 is perforated at the centre to house the injector 9, which is mounted coaxially to the tubular body 12 (or coaxially to the longitudinal axis 13); in other words, the fuel injector 9 is mounted through the base wall 14 of the tubular body 12 to inject fuel into the combustion chamber 7. Similarly, the base wall 15 is perforated at the centre to engage with the outlet duct 11, which ends in the discharge duct 3; i.e., the base wall 15 has a hot air outlet opening 17 to let hot air out of the combustion chamber 7 from which the outlet duct 11 originates.

As illustrated in Figure 2, through the tubular body 12 (at least) one inlet opening 18 is obtained, which is connected to the fan 8 by means of an inlet duct 19 (illustrated in Figure 1) so as to receive an air flow, which is directed into the combustion chamber 7 and mixes with the fuel injected by the fuel injector 9. Preferably, the air flows into the inlet opening 18 with a flow oriented tangentially (with respect to the tubular body 12), i.e., the inlet duct 19 is oriented tangentially (with respect to the tubular body 12).

According to a possible (but not binding) embodiment illustrated in Figure 1, a non-return valve 20 is provided at the inlet opening 18, the valve allows a flow of air only towards the combustion chamber 7 (i.e., flowing into the tubular body 12). Preferably, the non-return valve 20 is passive (i.e., it does not comprise electric, hydraulic or pneumatic actuators that generate a movement), is pressure-controlled and opens only when a pressure upstream of the non-return valve 20 is greater than a pressure downstream of the non-return valve 20. The function of the non-return valve 20 is to prevent that when the heating device 6 is not used (therefore when the fan 8 is off) exhaust gases can rise up to exit the inlet opening 18 and therefore disperse into the environment without passing through the treatment device 5. Alternatively, the non-return valve 20 could be mounted along the outlet duct 11, for example at the outlet opening 17; in this case, the non-return valve 20 allows a flow of air to only flow out of the combustion chamber 7 (to flow out of the tubular body 12) towards the exhaust duct 3, i.e., it prevents a flow of exhaust gas from the exhaust duct 3 towards the combustion chamber 7 (flowing into the tubular body 12).

As illustrated in Figure 2, the heating device 6 comprises a supply channel 21 which receives the air from the inlet opening 18, surrounds an end portion of the fuel injector 9, and ends with a nozzle 22 arranged around an injection point of the fuel injector 9 (i.e., around a nose of the fuel injector 9 from which the fuel comes out).

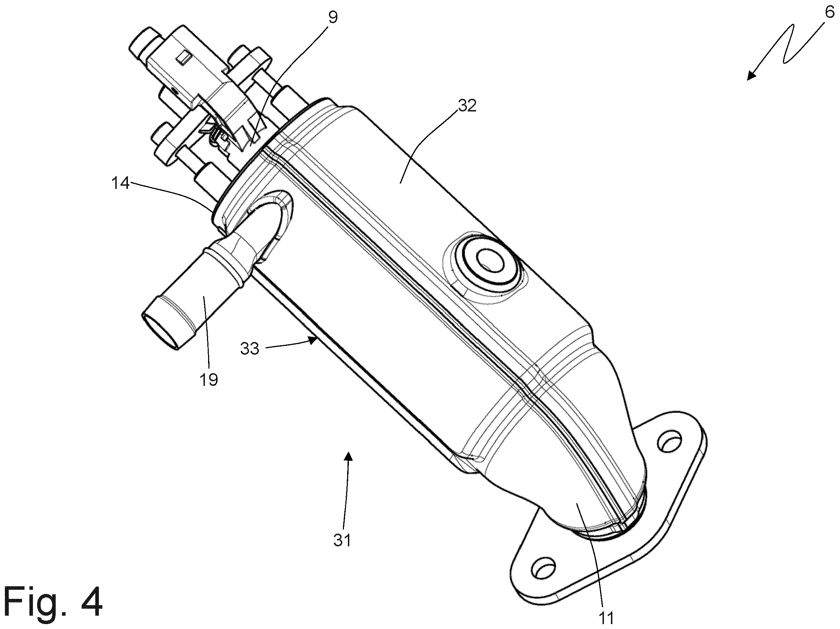

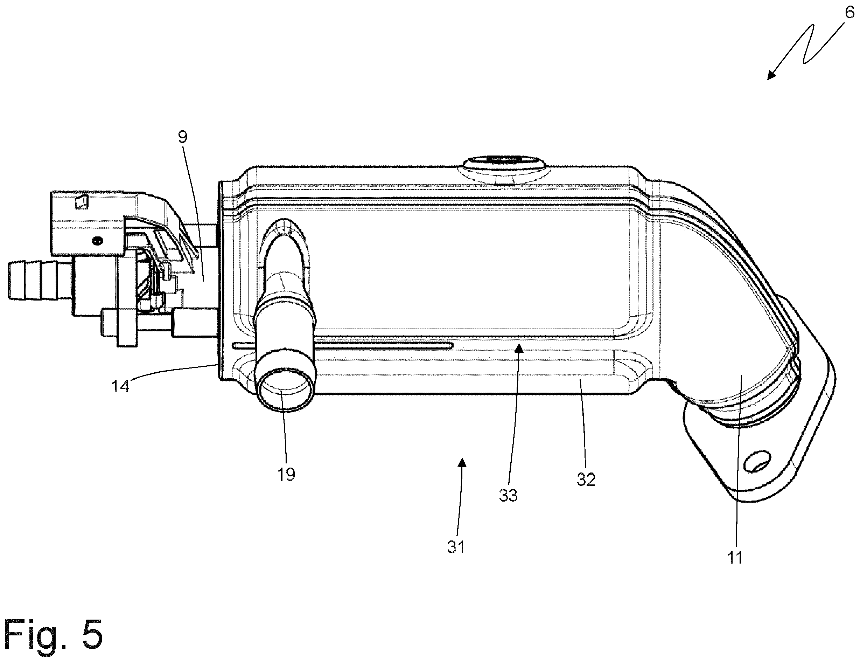

The spark plug 10 is mounted through the side wall 16 of the tubular body 12 to trigger the combustion of a mixture of air and fuel which is generated by the effect of the mixing of the air, which flows into the tubular body 12 from the inlet opening 18 and is introduced into the combustion chamber 7 by the nozzle 22 of the supply channel 21, and of the fuel, which is injected into the combustion chamber 7 by the fuel injector 9. In particular, the side wall 16 of the tubular body 12 has a radially oriented through-hole (i.e., perpendicular to the longitudinal axis 13) inside which the spark plug 10 is mounted (screwed) (which obviously is radially oriented); the through-hole for the spark plug 10 is shown in Figures 4, 5 and 7.

The heating device 6 comprises a static mixer 23 (i.e., devoid of moving parts), which, in the form of a circular crown, is arranged along the supply channel 21 and around the fuel injector 9, and is configured so as to generate turbulence, in particular a whirling motion, in the air flowing towards the nozzle 22.

According to a preferred, but not binding, embodiment illustrated in the attached figures, downstream of the static mixer 23 the supply channel 21 has a progressive reduction of the cross-sectional area so as to cause an increase in the air speed. In particular, downstream of the static mixer 23, the supply channel 21 has an initial portion having a constant cross-sectional area, an intermediate portion having a progressively decreasing cross-sectional area, and a final portion having a constant cross-sectional area up to nozzle 22.

The supply channel 21 is externally delimited by an external conical tubular body 24 and is internally delimited by an internal conical tubular body 25 that surrounds the fuel injector 9 and contains the fuel injector 9 inside. That is, the supply channel 21 is defined between the internal conical tubular body 25 and the external conical tubular body 24. In particular, the two conical tubular bodies 24 and 25 alternate conical segments (i.e., having a converging shape which progressively decreases its size) with cylindrical segments (i.e., having a constant size shape).

According to a preferred embodiment, the air flows into the supply channel 21 with a flow oriented tangentially so as to present a swirling trend (subsequently increased by the action of the static mixer 23) which favours mixing with the fuel injected by the fuel injector 9; in other words, the introduction of the combustion air into the combustion chamber 7 through a duct directed tangentially to the combustion chamber 7 allows to impart a circular motion to the combustion air flow (further emphasized by the presence of the static mixer 23) in a manner such as to optimize the air/fuel mixing inside the combustion chamber 7.

The heating device 6 comprises a labyrinth 26 which surrounds the side wall 16 of the tubular body 12, begins in the inlet opening 18, ends in the supply channel 21, and must necessarily be crossed by the air that, from the inlet opening 18 (i.e., from the fan 8), reaches the supply channel 21.

The labyrinth 26 comprises a delivery segment 27 which develops around half of the tubular body 12 (i.e., around 180° of the tubular body 12) and extends from the base wall 14 to the base wall 15 (also involving an initial portion of the outlet duct 11), and a return segment 28 which develops around the other half of the tubular body 12 (i.e., around 180° of the tubular body 12 in a complementary manner to the delivery segment 27) and extends from the base wall 15 to the base wall 14.

In other words, the delivery segment 27 develops around half of the tubular body 12 and extends from the inlet opening 18 at the base wall 14 of the tubular body 12 to an annular manifold 29 that surrounds the outlet duct 11; on the other hand, the return segment 28 develops around a remaining half of the tubular body 12 not engaged by the delivery segment 27, has no point overlapping with the delivery segment 27, and extends from the annular manifold 29 to the combustion chamber 7 (i.e. to the supply channel 21). The annular manifold 29 is an annular environment which surrounds the outlet duct 11 (which is the hottest point of the whole heating device 6) and connects the delivery segment 27 to the return segment 28; i.e., the air passes from the delivery segment 27 to the return segment 28 through the annular manifold 29 (which forms the joining point between the two segments 27 and 28). Therefore, the manifold 29 forms a transition area (space) between the delivery segment 27 and the return segment 28, i.e., an area in which the delivery segment 27 ends and the return segment 28 begins.

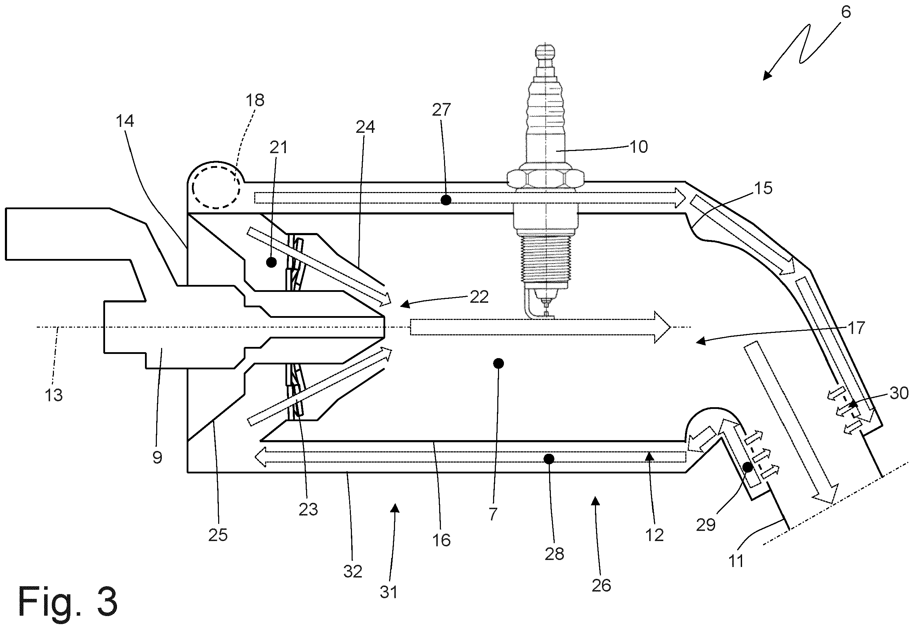

Figure 3 shows the paths of the air flows which pass through the tubular body 12 from the inlet opening 18 to the outlet opening 17; the air flows can be seen, which arrive in the supply channel 21 from the inlet opening 18 and then pass through the static mixer 23 to flow out of the nozzle 22 that surrounds the nose of the fuel injector 9. As illustrated in Figure 3, the air enters from the inlet opening 18, travels along the delivery segment 27 from the base wall 14 to the base wall 15, at the collector 29 it passes from the delivery segment 27 to the return segment 28 it runs through the return segment 28 from the base wall 15 to the base wall 14, and finally at the base wall 14 it passes from the return segment 28 to the supply channel 21.

In other words, the two segments 27 and 28 are arranged beside one another around the tubular body 12, covering the side wall 16 of the tubular body 12 in a complementary manner.

The presence of the labyrinth 26 between the inlet opening 18 and the supply channel 21 allows to obtain two positive effects: a very effective thermal insulation of the combustion chamber 7, which is surrounded (therefore thermally insulated) by the labyrinth 26 (therefore the temperature of the heating device 6 is decidedly lower) and a pre-heating of the combustion air, which is introduced into the combustion chamber 7 thus facilitating both the ignition of the combustion and the energy efficiency. In other words, the combustion air passing through the labyrinth heats up by absorbing heat from the combustion chamber 7 while obtaining a (positive) pre-heating of the combustion air and a (positive) thermal insulation of the combustion chamber 7.

In this way, the energy efficiency of the heating device 6 is high, since the heat that is released from the walls of the combustion chamber 7 does not represent a (complete) *"loss of thermal power"* as most of this heat is absorbed by the combustion air and therefore contributes to heat the catalyst (i.e., increases the energy efficiency of the heating device 6).

Generally, the temperature of the combustion air entering the combustion chamber 7 after passing through the labyrinth 26 is about 100-150°C.

In addition, the delivery segment 27 of the labyrinth 26 is arranged at the spark plug 10 so that the combustion air that crosses the delivery segment 27 passes around the spark plug 10 thus causing a beneficial cooling effect of the spark plug 10; in this way, the spark plug 10 (which is located in the heart of the combustion chamber 7) does not overheat because it is constantly cooled by the combustion air that crosses the delivery segment 27.

The fuel injector 9, on the other hand, does not require particular cooling, as it is not located in the heart of the combustion chamber 7 (in fact its nose is in any case at a given distance from the front of the flame) and is cooled both by the fuel flowing inside, and by the (relatively) fresh air that circulates in the supply channel 21 around the fuel injector 9.

According to a possible, but not limiting, embodiment illustrated in Figures 2 and 3, the labyrinth 26 has a plurality of through and calibrated exchange holes 30 which put the labyrinth 26 in direct communication (at the manifold 29) with the outlet duct 11. The function of the exchange holes 30 is to introduce part of the air coming from the fan 8 directly into the outlet duct 11 without crossing (i.e., bypassing) the combustion chamber 7. Entering fresh air directly downstream of the combustion chamber 7 decreases the temperature of the hot air that is introduced into the exhaust duct 3 and passes through the treatment device 5 and therefore avoids overheating the treatment device 5. In other words, the presence of the exchange holes 30 allows to control the temperature of the combustion gases flowing towards the exhaust duct 3 (i.e., towards the treatment device 5) to prevent the combustion gases temperature of the combustion gases from reaching critical levels (too high) for the treatment device 5.

By appropriately sizing the exchange holes 30 (which are calibrated) it is possible to obtain an optimal temperature of the combustion gases flowing towards the exhaust duct 3 (i.e., towards the treatment device 5): generally the combustion gases flowing out of the combustion chamber 7 have a temperature of 1200-1400°C) while the optimal temperature of the combustion gases flowing towards the exhaust duct 3 (i.e. towards the treatment device 5) should be 800-900°C; therefore, an appropriate sizing of the calibrated exchange holes 30 allows to mix an adequate flow of fresh air with the flow of combustion gases flowing out of the combustion chamber 7 so as to obtain an optimal temperature downstream of the calibrated exchange holes 30.

It is important to underline that cooling the combustion gases coming out of the combustion chamber 7 with the addition of fresh air lowers the temperature of the combustion gases and, at the same time, increases the flowrate of the combustion gases; therefore overall the thermal power generated by the heating device 6 (which can be calculated by multiplying the temperature of the combustion gases by the flowrate of the combustion gases) remains (approximately) constant due to the effect of the compensation between the decrease in the temperature of the combustion gases and the increase in the flowrate of the combustion gases.

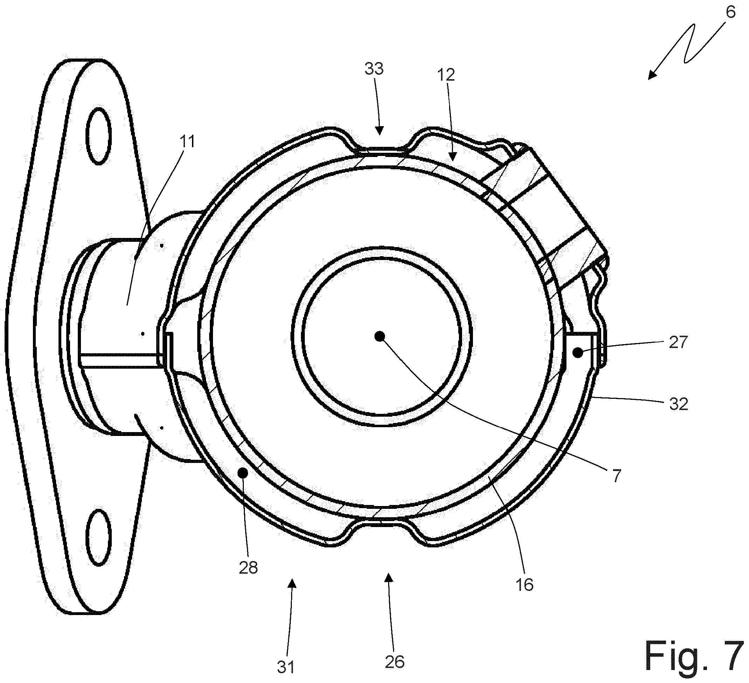

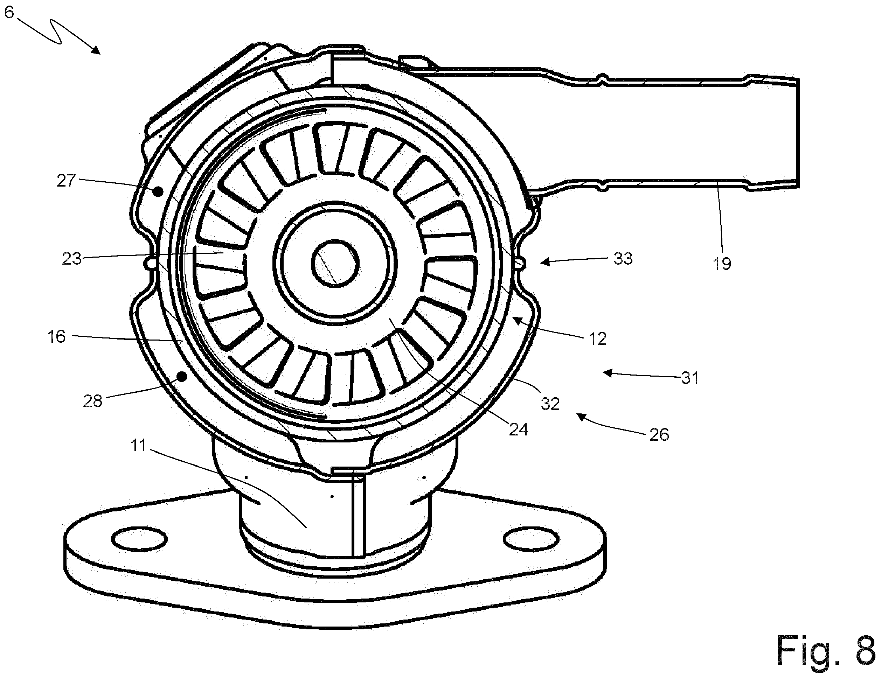

In the embodiment illustrated in the attached figures, the heating device 6 comprises a further tubular body 31 which is coaxial to the tubular body 12 and is arranged around the tubular body 12. Between the two tubular bodies 12 and 31 an annular space is delimited in which the labyrinth 26 is obtained (i.e., the delivery segment 27 and the return segment 28 of the labyrinth 26). The longitudinal (axial) separation between the delivery segment 27 and the return segment 28 is obtained by means of an inward deformation (i.e., towards the longitudinal axis 13) of a side wall 32 of the tubular body 31; i.e., the side wall 32 of the tubular body 31 has two straight recesses 33 (deformations) (illustrated in Figures 7 and 8) which are "U"-shaped, are arranged on opposite sides of the side wall 32, and end in contact with the side wall 16 of the tubular body 12 so as to create an insulation between the delivery segment 27 and the return segment 28 of the labyrinth 26.

The presence of the two recesses 33 of the side wall 32 of the tubular body 31 allows to obtain the insulation between the delivery segment 27 and the return segment 28 of the labyrinth 26 in an extremely simple way, i.e., without adding any further element but only by means of a localized variation (deformation) of the shape of the side wall 32 of the tubular body 31.

According to a preferred embodiment, the heating device 6 comprises a control unit 34 (schematically illustrated in Figure 1) which is configured to control the entire operation of the heating device 6, i.e., to actuate the fan 8, the injector 9, and the spark plug 10, in a coordinated way so as to reach the desired objective in the most efficient and effective way possible (i.e., to rapidly heat the treatment device 5 without damaging the treatment device 5 due to excess temperature).

In the (non-limiting) embodiment illustrated in the attached figures, the supply channel 21 is provided, which receives the air from the labyrinth 26 (i.e., from the return segment 28 of the labyrinth 26), surrounds an end portion of the fuel injector 9, and ends with a nozzle 22 arranged around an injection point of the fuel injector 9; according to a different embodiment not illustrated, the supply channel 21 is absent and the labyrinth 26 (i.e., the return segment 28 of the labyrinth 26) ends with an opening which flows out directly into the combustion chamber 7. That is, in all cases the labyrinth 26 starts from the inlet opening 18 and ends in the combustion chamber 7 with (or possibly even without) the interposition of the supply channel 21 (which is therefore an optional element).

The embodiments described herein can be combined with each other without departing from the scope of the present invention.

The heating device 6 described above has numerous advantages.

Firstly, the heating device 6 described above allows to obtain a high energy efficiency even in the presence of extremely reduced dimensions.

Furthermore, the heating device 6 described above allows to substantially limit the transmission of heat from the combustion chamber 7 to the elements arranged in proximity to the heating device 6, avoiding damage to said elements due to excess heating.

The heating device 6 described above also has a high thermal power in relation to its overall dimensions; i.e., although the heating device 6 described above is relatively small, it allows to generate a high thermal power.

Finally, the heating device 6 described above is simple and inexpensive to manufacture, since it is composed of a few parts of not complex shape and easy to join with standard welds and assemblies.

### LIST OF REFERENCE NUMBERS OF THE FIGURES

1 exhaust system
2 internal combustion engine
3 exhaust duct
4 silencer
5 treatment device
6 heating device
7 combustion chamber
8 fan
9 fuel injector
10 spark plug
11 outlet duct
12 tubular body
13 longitudinal axis
14 base wall
15 base wall
16 side wall
17 outlet opening
18 inlet opening
19 inlet duct
20 non-return valve
21 supply channel
22 nozzle
23 static mixer
24 external conical tubular body
25 internal conical tubular body
26 labyrinth
27 delivery segment
28 return segment
29 manifold
30 exchange holes
31 tubular body
32 side wall
33 recesses
34 control unit

## Claims

1. A heating device (6) for an exhaust system (1) of an internal combustion engine (2); the heating device (6) comprises:
a first tubular body (12) where a combustion chamber (7) is obtained on the inside;
a fuel injector (9), which is mounted through a first base wall (14) of the first tubular body (12) so as to inject fuel into the combustion chamber (7);
at least one inlet opening (18), which can be connected to a fan (8) so as to receive an air flow, which is directed into the combustion chamber (7) and mixes with the fuel;
a hot air outlet opening (17) to let hot air out of the combustion chamber (7), which outlet opening (17) is obtained at a second base wall (15) of the first tubular body (12) opposite the first base wall (14);
an outlet duct (11), which originates from the outlet opening (17);
a spark plug (10), which is mounted through a side wall (16) of the first tubular body (12) so as to trigger the combustion of a mixture of air and fuel; and
a labyrinth (26), which surrounds a side wall (16) of the first tubular body (12), starts from the inlet opening (18), ends in the combustion chamber (7) and must necessarily be crossed through by the air that, from the inlet opening (18), reaches the combustion chamber (7);
wherein the labyrinth (26) comprises a delivery segment (27), which develops around the first tubular body (12) and extends from the inlet opening (18) at the first base wall (14) of the first tubular body (12), to an annular manifold (29), which preferably surrounds the outlet duct (11); and
the heating device (6) is **characterized in that:**
the delivery segment (27) develops only around half of the first tubular body (12); and
the labyrinth (26) comprises a return segment (28), which develops around a remaining half of the first tubular body (12) that is not engaged by the delivery segment (27), has no point overlapping with the delivery segment (27) and extends from the annular manifold (29) to the combustion chamber (7).

2. The heating device (6) according to claim 1, wherein the delivery segment (27) develops around half of the first tubular body (12) and the return segment (28) develops around the other half of the first tubular body (12) in a complementary manner relative to the delivery segment (27).

3. The heating device (6) according to claim 1 or 2, wherein the annular manifold (29) connects the delivery segment (27) to the return segment (28) and, hence, air flows from the delivery segment (27) to the return segment (28) through the annular manifold (29).

4. The heating device (6) according to claim 1, 2 or 3, wherein the two segments (27, 28) of the labyrinth (26) are arranged beside one another around the first tubular body (12), thus covering the side wall (16) of the first tubular body (12) in a complementary manner.

5. The heating device (6) according to one of the claims from 1 to 4, wherein the delivery segment (27) of the labyrinth (26) arranged at the spark plug (10) so that the air flowing through the delivery segment (27) flows around the spark plug (10).

6. The heating device (6) according to one of the claims from 1 to 5, wherein:
a second tubular body (31) is provided, which is coaxial with the first tubular body (12) and is arranged around the first tubular body (12); and
between the two tubular bodies (12, 31) an annular space is delimited where the labyrinth (26) is obtained.

7. The heating device (6) according to claim 6, wherein the longitudinal separation between the delivery segment (27) and the return segment (28) is obtained by means of an inward deformation of a side wall (32) of the second tubular body (31).

8. The heating device (6) according to claim 7, wherein the side wall (32) of the second tubular body (31) has two straight recesses (33), which are arranged on opposite sides of the side wall (32) and end in contact with the side wall (16) of the first tubular body (12) so as to create an insulation between the delivery segment (27) and the return segment (28).

9. The heating device (6) according to one of the claims from 1 to 8, wherein the labyrinth (26) has a plurality of through exchange holes (30), which are calibrated and establish a direct communication between the labyrinth (26) and the outlet duct (11) .

10. The heating device (6) according to claim 9, wherein the exchange holes (30) are obtained at the manifold (29).

11. The heating device (6) according to one of claims from 1 to 10, wherein the air flows into the inlet opening (18) with a tangentially oriented flow.

12. The heating device (6) according to one of the claims from 1 to 11 and comprising a non-return valve (20), which is arranged at the inlet opening (18), allows air to only flow towards an exhaust duct (3) of the exhaust system (1), is passive, is pressure-controlled and opens only when a pressure upstream of the non-return valve (20) is higher than a pressure downstream of the non-return valve (20).

13. The heating device (6) according to one of the claims from 1 to 12 and comprising a supply channel (21) which receives the air from the inlet opening (18) through the labyrinth (26), surrounds an end portion of the fuel injector (9), and ends with a nozzle (22) arranged around an injection point of the fuel injector (9).

14. The heating device (6) according to claim 13 and comprising a static mixer (23), which is shaped like a circular crown, is arranged along the supply channel (21) and around the fuel injector (9), and it is configured to generate turbulence, in particular a swirling motion, in the air flowing towards the nozzle (22).

15. An exhaust system (1) of an internal combustion engine (2); the exhaust system (1) comprises:
an exhaust duct (3), which originates from an exhaust manifold of the internal combustion engine (2) and ends with a silencer (4), from which the exhaust gases are released into the atmosphere;
an exhaust gas treatment device (5), which is arranged along the exhaust duct (3); and
a heating device (6), which is connected to the exhaust duct (3) upstream of the treatment device (5), is designed to generate, by burning fuel, a hot air flow and is manufactured according to one of the claims from 1 to 14.

## Patentansprüche

1. Heizvorrichtung (6) für ein Abgassystem (1) eines Verbrennungsmotors (2); wobei die Heizvorrichtung (6) umfasst:
einen ersten röhrenförmigen Körper (12), in dessen Innerem eine Brennkammer (7) bereitgestellt wird;
einen Kraftstoffinjektor (9), der durch eine erste Basiswand (14) des ersten rohrförmigen Körpers (12) hindurch montiert ist, um Kraftstoff in die Brennkammer (7) einzuspritzen;
wenigstens eine Einlassöffnung (18), die mit einem Gebläse (8) verbunden werden kann, um einen Luftstrom aufzunehmen, der in die Brennkammer (7) geleitet ist und mit dem Kraftstoff vermischt wird;
eine Heißluftauslassöffnung (17), um heiße Luft aus der Brennkammer (7) abzulassen, wobei die Auslassöffnung (17) an einer zweiten Basiswand (15) des ersten rohrförmigen Körpers (12) gegenüber der ersten Basiswand (14) ausgebildet ist;
einen Auslasskanal (11), der von der Auslassöffnung (17) ausgeht;
eine Zündkerze (10), die durch eine Seitenwand (16) des rohrförmigen Körpers (12) hindurch montiert ist, um die Verbrennung eines Gemisches aus Luft und Kraftstoff auszulösen; und
ein Labyrinth (26), das eine Seitenwand (16) des ersten rohrförmigen Körpers (12) umgibt, von der Einlassöffnung (18) ausgeht, in der Brennkammer (7) endet und von der Luft, die von der Einlassöffnung (18) in die Brennkammer (7) gelangt, zwangsläufig durchquert werden muss;
wobei das Labyrinth (26) ein Zuführsegment (27) umfasst, das sich um den ersten rohrförmigen Körper (12) herum ausbildet und sich von der Einlassöffnung (18) an der ersten Basiswand (14) des ersten rohrförmigen Körpers (12) bis zu einem ringförmigen Verteiler (29) erstreckt, der vorzugsweise den Auslasskanal (11) umgibt; und
die Heizvorrichtung (6) **dadurch gekennzeichnet ist, dass**:
das Zuführsegment (27) sich nur um die Hälfte des ersten röhrenförmigen Körpers (12) ausbildet; und
das Labyrinth (26) ein Rücklaufsegment (28) aufweist, das sich um eine verbleibende Hälfte des ersten rohrförmigen Körpers (12) herum ausbildet, die nicht von dem Zuführsegment (27) erfasst wird, sich nicht mit dem Zuführsegment (27) überlappt und sich von dem ringförmigen Verteiler (29) zu der Brennkammer (7) erstreckt.

2. Heizvorrichtung (6) nach Anspruch 1, wobei sich das Zuführsegment (27) um die Hälfte des ersten röhrenförmigen Körpers (12) ausbildet und das Rücklaufsegment (28) sich um die andere Hälfte des ersten röhrenförmigen Körpers (12) in einer komplementären Weise relativ zum Zuführsegment (27) ausbildet.

3. Heizvorrichtung (6) nach Anspruch 1 oder 2, wobei der ringförmige Verteiler (29) das Zuführsegment (27) mit dem Rücklaufsegment (28) verbindet und daher Luft vom Zuführsegment (27) zum Rücklaufsegment (28) durch den ringförmigen Verteiler (29) strömt.

4. Heizvorrichtung (6) nach Anspruch 1, 2 oder 3, wobei die beiden Segmente (27, 28) des Labyrinths (26) nebeneinander um den ersten rohrförmigen Körper (12) angeordnet sind und somit die Seitenwand (16) des ersten rohrförmigen Körpers (12) in ergänzender Weise abdecken.

5. Heizvorrichtung (6) nach einem der Ansprüche 1 bis 4, wobei das Zuführsegment (27) des Labyrinths (26) an der Zündkerze (10) angeordnet ist, so dass die durch das Zuführsegment (27) strömende Luft die Zündkerze (10) umströmt.

6. Heizvorrichtung (6) nach einem der Ansprüche 1 bis 5, wobei:
ein zweiter rohrförmiger Körper (31) vorgesehen ist, der koaxial mit dem ersten rohrförmigen Körper (12) angeordnet ist und um den ersten rohrförmigen Körper (12) herum angeordnet ist; und
zwischen den beiden rohrförmigen Körpern (12, 31) ein ringförmiger Raum gebildet wird, in dem das Labyrinth (26) erhalten wird.

7. Heizvorrichtung (6) nach Anspruch 6, wobei die longitudinale Trennung zwischen dem Zuführsegment (27) und dem Rücklaufsegment (28) durch eine nach innen gerichtete Verformung einer Seitenwand (32) des zweiten rohrförmigen Körpers (31) erhalten wird.

8. Heizvorrichtung (6) nach Anspruch 7, wobei die Seitenwand (32) des zweiten rohrförmigen Körpers (31) zwei gerade Vertiefungen (33) aufweist, die auf gegenüberliegenden Seiten der Seitenwand (32) angeordnet sind und in Kontakt mit der Seitenwand (16) des ersten rohrförmigen Körpers (12) enden, um eine Isolierung zwischen dem Zuführsegment (27) und dem Rücklaufsegment (28) zu schaffen.

9. Heizvorrichtung (6) nach einem der Ansprüche 1 bis 8, **dadurch gekennzeichnet, dass** das Labyrinth (26) eine Vielzahl von durchgehenden Austauschlöchern (30) aufweist, die kalibriert sind und eine direkte Verbindung zwischen dem Labyrinth (26) und dem Auslasskanal (11) herstellen.

10. Heizvorrichtung (6) nach Anspruch 9, wobei die Austauschlöcher (30) am Verteiler (29) erhalten werden.

11. Heizvorrichtung (6) nach einem der Ansprüche 1 bis 10, wobei die Luft mit einer tangentialen Strömung in die Einlassöffnung (18) strömt.

12. Heizvorrichtung (6) nach einem der Ansprüche 1 bis 11, die ein an der Einlassöffnung (18) angeordnetes Rückschlagventil (20) umfasst, das Luft nur in Richtung zu einem Abgaskanal (3) des Abgassystems (1) strömen lässt, passiv ist, druckgesteuert ist und nur dann öffnet, wenn ein Druck stromaufwärts des Rückschlagventils (20) höher ist als ein Druck stromabwärts des Rückschlagventils (20).

13. Heizvorrichtung (6) nach einem der Ansprüche 1 bis 12, die einen Zuführungskanal (21) umfasst, der die Luft von der Einlassöffnung (18) durch das Labyrinth (26) aufnimmt, einen Endabschnitt des Kraftstoffinjektors (9) umgibt und mit einer Düse (22) endet, die um einen Einspritzpunkt des Kraftstoffinjektors (9) angeordnet ist.

14. Heizvorrichtung (6) nach Anspruch 13, die einen kranzförmigen statischen Mischer (23) umfasst, der entlang des Zuführungskanals (21) und um den Kraftstoffinjektor (9) herum angeordnet ist und dazu konfiguriert ist, in der zur Düse (22) strömenden Luft eine Turbulenz, insbesondere eine Wirbelbewegung, zu erzeugen.

15. Abgassystem (1) eines Verbrennungsmotors (2); wobei das Abgassystem (1) umfasst:
einen Abgaskanal (3), der von einem Abgaskrümmer des Verbrennungsmotors (2) ausgeht und mit einem Schalldämpfer (4) endet, aus dem die Abgase in die Atmosphäre abgegeben werden;
eine Abgasbehandlungsvorrichtung (5), die entlang des Abgaskanals (3) angeordnet ist; und
eine Heizvorrichtung (6), die mit dem Abgaskanal (3) stromaufwärts der Behandlungsvorrichtung (5) verbunden ist, dazu ausgebildet ist, durch Verbrennung von Kraftstoff einen Heißluftstrom zu erzeugen, und gemäß einem der Ansprüche 1 bis 14 hergestellt ist.

## Revendications

1. Dispositif de chauffage (6) pour un système d'échappement (1) d'un moteur à combustion interne (2) ; le dispositif de chauffage (6) comprend :
un premier corps tubulaire (12) où une chambre de combustion (7) est obtenue à l'intérieur ;
un injecteur de carburant (9) qui est monté à travers une première paroi de base (14) du premier corps tubulaire (12) afin d'injecter le carburant dans la chambre de combustion (7) ;
au moins une ouverture d'entrée (18) qui peut être raccordée à un ventilateur (8) afin de recevoir un flux d'air, qui est dirigé dans la chambre de combustion (7) et se mélange avec le carburant ;
une ouverture de sortie d'air chaud (17) pour laisser sortir l'air chaud de la chambre de combustion (7), laquelle ouverture de sortie (17) est obtenue au niveau d'une seconde paroi de base (15) du premier corps tubulaire (12) opposée à la première paroi de base (14) ;
un conduit de sortie (11) qui prend son origine à l'ouverture de sortie (17) ;
une bougie d'allumage (10) qui est montée à travers une paroi latérale (16) du premier corps tubulaire (12) afin de déclencher la combustion d'un mélange d'air et de carburant ; et
un labyrinthe (26) qui entoure une paroi latérale (16) du premier corps tubulaire (12), commence à partir de l'ouverture d'entrée (18), se termine par la chambre de combustion (7) et doit nécessairement être traversé par l'air qui, à partir de l'ouverture d'entrée (18), atteint la chambre de combustion (7) ;
dans lequel le labyrinthe (26) comprend un segment de distribution (27), qui se développe autour du premier corps tubulaire (12) et s'étend à partir de l'ouverture d'entrée (18) au niveau de la première paroi de base (14) du premier corps tubulaire (12), jusqu'à un collecteur annulaire (29) qui entoure de préférence le conduit de sortie (11) ; et
le dispositif de chauffage (6) est **caractérisé en ce que** :
le segment de distribution (27) se développe uniquement autour de la moitié du premier corps tubulaire (12) ; et
le labyrinthe (26) comprend un segment de retour (28) qui se développe autour d'une moitié résiduelle du premier corps tubulaire (12) qui n'est pas mise en prise par le segment de distribution (27), n'a pas de point chevauchant le segment de distribution (27) et s'étend à partir du collecteur annulaire (29) jusqu'à la chambre de combustion (7).

2. Dispositif de chauffage (6) selon la revendication 1, dans lequel le segment de distribution (27) se développe autour de la moitié du premier corps tubulaire (12) et le segment de retour (28) se développe autour de l'autre moitié du premier corps tubulaire (12) d'une manière complémentaire par rapport au segment de distribution (27).

3. Dispositif de chauffage (6) selon la revendication 1 ou 2, dans lequel le collecteur annulaire (29) raccorde le segment de distribution (27) au segment de retour (28) et par conséquent l'air s'écoule du segment de distribution (27) au segment de retour (28) par le biais du collecteur annulaire (29).

4. Dispositif de chauffage (6) selon la revendication 1, 2 ou 3, dans lequel les deux segments (27, 28) du labyrinthe (26) sont agencés l'un à côté de l'autre autour du premier corps tubulaire (12), couvrant ainsi la paroi latérale (16) du premier corps tubulaire (12) d'une manière complémentaire.

5. Dispositif de chauffage (6) selon l'une des revendications 1 à 4, dans lequel le segment de distribution (27) du labyrinthe (26) agencé au niveau de la bougie d'allumage (10) de sorte que l'air s'écoulant par le segment de distribution (27) s'écoule autour de la bougie d'allumage (10).

6. Dispositif de chauffage (6) selon l'une des revendications 1 à 5, dans lequel :
on prévoit un second corps tubulaire (31), qui est coaxial avec le premier corps tubulaire (12) et est agencé autour du premier corps tubulaire (12) ; et
entre les deux corps tubulaires (12, 31), un espace annulaire est délimité à l'endroit où le labyrinthe (26) est obtenu.

7. Dispositif de chauffage (6) selon la revendication 6, dans lequel la séparation longitudinale entre le segment de distribution (27) et le segment de retour (28) est obtenue au moyen d'une déformation vers l'intérieur d'une paroi latérale (32) du second corps tubulaire (31).

8. Dispositif de chauffage (6) selon la revendication 7, dans lequel la paroi latérale (32) du second corps tubulaire (31) a deux évidements droits (33), qui sont agencés sur les côtés opposés de la paroi latérale (32) et une extrémité en contact avec la paroi latérale (16) du premier corps tubulaire (12) afin de créer une isolation entre le segment de distribution (27) et le segment de retour (28).

9. Dispositif de chauffage (6) selon l'une des revendications 1 à 8, dans lequel le labyrinthe (26) a une pluralité de trous d'échange débouchants (30) qui sont calibrés et établissent une communication directe entre le labyrinthe (26) et le conduit de sortie (11).

10. Dispositif de chauffage (6) selon la revendication 9, dans lequel les trous d'échange (30) sont obtenus au niveau du collecteur (29).

11. Dispositif de chauffage (6) selon l'une des revendications 1 à 10, dans lequel l'air s'écoule dans l'ouverture d'entrée (18) avec un écoulement orienté de manière tangentielle.

12. Dispositif de chauffage (6) selon l'une des revendications 1 à 11 et comprenant une valve de non-retour (20), qui est agencée au niveau de l'ouverture d'entrée (18), permet à l'air de s'écouler uniquement vers un conduit d'échappement (3) du système d'échappement (1), est passive, est commandée par pression et s'ouvre uniquement lorsqu'une pression en amont de la valve de non-retour (20) est supérieure à une pression en aval de la valve de non-retour (20).

13. Dispositif de chauffage (6) selon l'une des revendications 1 à 12 et comprenant un canal d'alimentation (21) qui reçoit l'air de l'ouverture d'entrée (18) par le biais du labyrinthe (26), entoure une partie d'extrémité de l'injecteur de carburant (9) et se termine par une buse (22) agencée autour d'un point d'injection de l'injecteur de carburant (9).

14. Dispositif de chauffage (6) selon la revendication 13 et comprenant un mélangeur statique (23) qui est en forme de couronne circulaire, est agencé le long du canal d'alimentation (21) et autour de l'injecteur de carburant (9) et il est configuré pour générer une turbulence, en particulier un mouvement tourbillonnant, dans l'air s'écoulant vers la buse (22).

15. Système d'échappement (1) d'un moteur à combustion interne (2) ; le système d'échappement (1) comprend :
un conduit d'échappement (3) qui prend son origine à partir d'un collecteur d'échappement du moteur à combustion interne (2) et se termine par un silencieux (4), à partir duquel les gaz d'échappement sont libérés dans l'atmosphère ;
un dispositif de traitement de gaz d'échappement (5) qui est agencé le long du conduit d'échappement (3) ; et
un dispositif de chauffage (6) qui est raccordé au conduit d'échappement (3) en amont du dispositif de traitement (5), est conçu pour générer, en brûlant du carburant, un flux d'air chaud et est fabriqué selon l'une quelconque des revendications 1 à 14.
